# EUROPEAN PATENT SPECIFICATION

(11) **EP 2 048 188 B1**
(45) Date of publication and mention of the grant of the patent: **11.07.2012**
(21) Application number: 08158078.9
(22) Date of filing: 11.06.2008
(51) Int. Cl.: C08K 5/092, C08J 3/22, C08J 9/00, C08L 67/02, C08L 23/08, C08K 5/1515

(54) **Masterbatch of polyfunctional compounds usable for producing manufactured articles made of expanded polyester resin**
Vormischung polyfunktioneller Zusammensetzungen zur Erzeugung von Fertigartikeln aus expandiertem Polyesterharz
Mélange maître de composés polyfonctionnels utilisables pour produire des articles manufacturés en résine polyester expansée

(30) Priority: 10.10.2007 IT MI20071958
(43) Date of publication of application: 15.04.2009
(73) Proprietor: B.L.Plastic S.R.L., 03012 Anagni (FR) (IT)
(72) Inventor: Severini, Tonino, 00034, Colleferro RM (IT)
(74) Representative: Modiano, Micaela Nadia

(56) References cited:
- WO-A-2005/123820
- DE-A1- 10 000 712
- US-A- 4 612 349
- US-A- 5 128 202
- US-A- 5 362 763
- US-A- 5 536 793
- US-A- 5 654 347
- US-A- 5 696 176
- US-A- 5 776 994
- US-A- 6 117 550
- US-A1- 2004 001 946
- DATABASE WPI Week 199324 Thomson Scientific, London, GB; AN 1993-191654 XP002510024 & JP 05 117501 A (KANEKA CORP) 14 May 1993 (1993-05-14)
- DATABASE WPI Week 200008 Thomson Scientific, London, GB; AN 2000-091045 XP002510025 & JP 11 323037 A (MITSUI CHEM INC) 26 November 1999 (1999-11-26)

## Description

The present invention relates to a masterbatch which can be used in particular for producing manufactured articles made of expanded aromatic polyester, capable of imparting to the expanded product, once it has solidified, mechanical properties which are largely superior to those currently observed in equivalent expanded polyester resin articles obtained by using known types of masterbatch, and to a process for preparing such manufactured articles starting from the components of the masterbatch introduced directly in the extruder for preparing the manufactured articles.

The technology currently used on a large scale to manufacture polyester resin expanded materials uses resins which already have characteristics suitable for being expanded and/or uses masterbatches which impart to the polyester resin, directly during extrusion, the rheological characteristics suitable for making the polyester expandable.

An application in which expanded materials have more successful opportunities of industrial application is that of composites, in which normally the inner part of the composite is constituted by expanded materials, which provide a low weight, while the outer part is formed by rigid materials (usually thermosetting ones) which impart the required optical and mechanical properties to the final composite.

The criticality of the composite materials resides in the mechanical characteristics that they have at the interface between the outer part (skin) and the inner part (core foam). The characteristics of compressive strength of the expanded material and of the ability to withstand great elongation of the foam when the composite is subjected to intense stresses (shear) in fact determine the quality of the "expanded core" and its applicability to high value fields of application.

To have an idea of the characteristics that expanded materials to be used for so-called "sandwich" applications currently should have, it is sufficient to consider expanded PVC, which can have a shear elongation of approximately 20% with compression strength values of approximately 1.3 N/mm² for foams with a density of approximately 75-85 kg/m³.

Currently commercially available expanded PET has interesting mechanical characteristics as regards the aspects related to thermal stability, but has obvious shortcomings especially in the property of elongation in shear conditions.

Currently, expanded polyester with a density of approximately 110 kg/m³ has a shear elongation at break of 3%, with compression strength values of approximately 1.2-1.4 N/mm².

The evident low capacity for elongation in "shear" conditions makes current expanded polyester inadequate for applications requiring a high stress elongation and therefore inadequate for an important diffusion in the field of composite materials.

It is known in the literature that there are some products of the impact modifier family for PET which are generally elastomeric products known to increase impact strength and elongation, while the moduli decrease. These materials improve impact strength due to transition from fragile to ductile of the fracture mode in a rubber/elastomer phase in the matrix of the polyester. The role of the elastomeric particles is to create a "wider" deformation mechanism instead of a localized phenomenon, thus increasing the amount of energy dissipated in the fracture.

The efficiency of this modification depends closely on the following parameters:
- type of rubber/elastomer and functionality
- amount of rubber/elastomer
- size of the rubber/elastomer particles dispersed in the polymeric matrix.

It is also known from the literature that the amount of modifiers required to achieve significant advantages from a mechanical standpoint must be on the order of 10/30% by weight with respect to the polymeric matrix. It is also known that the commercial cost of these additives is extremely high, and therefore the amount necessary to achieve the desired mechanical properties is directly proportional to the final cost of the manufactured article.

Another limitation related to the effectiveness of these products with high-viscosity PET relates to the lowering of the concentration of the functional groups of polyester as the intrinsic viscosity increases, limiting the reactivity of these products with PET. None of the currently known masterbatches in which the polyfunctional compound is dispersed in an expanded polyester matrix allows to achieve sufficiently high shear elongations at break.

It has now been found unexpectedly that it is possible to achieve excellent elongation properties of expanded aromatic polyester manufactured articles by using the masterbatch which comprises an elastomeric material selected between an ethylene/acrylic ester/third monomer terpolymer, where the acrylic ester is an alkyl or isoalkyl acrylic in which the alkyl or isoalkyl radical contains 1 to 6 carbon atoms and preferably is methyl, ethyl or butyl acrylate, while the third monomer is selected among maleic anhydride (MA) or glycidyl methacrylate (GMA) and mixtures thereof. The copolymers constitute the matrix, in which a polyfunctional compound is dispersed which is selected among dianhydrides of tetracarboxylic aromatic or aliphatic acids. Pyromellitic acid dianhydride (PMDA) is the preferred compound. Examples of other dianhydrides which can be used are dianhydrides of 2,2',4,4'-diphenyl tetracarboxylic acid, 3,3',4,4' benzophenone tetracarboxylic acid and cyclopentane tetracarboxylic acid.

The ethylene-acrylic ester terpolymers - MA and/or GMA generally contain 2-20% by weight of MA and/or GMA; 10-40% by weight of acrylic ester; the remainder is constituted by ethylene. The ethylene-acrylic ester copolymers linked with MA and/or GMA contain 2-20% by weight of linking agent. Lotader GMA AX 8900 by Archema, EBA Lotryl 29MA03 by Atofina and E-BA-GMA Elvaloy by DuPont are representative commercial products whose registered trademarks are cited.

The polyfunctional compound is used, for example, in a quantity from 0.05 to 25% by weight.

In the masterbatch the terpolymer can be replaced in an amount from 2 to 95% by weight by an elastomeric ethylene-methylacrylate, ethylene-ethylacrylate and/or ethylene-butylacrylate copolymer.

The polyfunctional compounds are used in quantities from 0.01 to 25% by weight, preferably from 0.2 to 5%, the remainder of the mixture comprising the elastomer copolymers having the characteristics cited above and optionally impact modifiers of a known type selected in particular among ethylene-alkyl acrylate elastomeric copolymers such as ethylene-methyl-ethyl and -butyl acrylate, which can vary in percentage according to the requirements of the application.

To produce the above cited masterbatches, twin-screw extruders with a high rotation rate are used which allow to achieve a uniform dispersion of the polyfunctional compound in the elastomeric matrix constituted by the impact modifiers. In general, the rotation rate of the screws is 200-400 rpm. The melting point of the impact modifiers, comprising both the elastomeric copolymers according to the invention and known types of elastomeric materials, ranges generally from 60 to 120°C. Production of the masterbatch is performed by feeding into the loading port of the extruder the impact modifiers, which are brought to a working temperature of approximately 130°C, to which the components of the mixture are mixed intimately. Once they have been melted and mixed, the impact modifiers are added in the final part of the extruder with the polyfunctional compounds.

Since the polyfunctional compounds have a melting point above 125°C, their mixing with the polymeric/elastomeric matrix occurs at a temperature which is much lower than their melting points. In such conditions, the polyfunctional compounds, by remaining practically in the solid state, have no chance of reacting with the polymeric matrix. The mixture thus prepared is then extruded to produce granules.

The amount of masterbatch that can be used to manufacture expanded articles is 1-20% on the total weight of the masterbatch-polyester mixture. The elastomer phase of the masterbatch is dispersed in the polyester resin in the form of domains having an average size of less than 50 µm, preferably less than 10 µm. This fine dispersion allows to achieve the excellent elongation properties of the expanded manufactured articles.

As already indicated, the expanded manufactured articles can be obtained also by loading the components of the masterbatch directly into the extruder for preparing such articles. The manufactured articles obtained have properties which are similar to those obtained by using the masterbatch and are characterized in that they comprise, in addition to the polyester resin, the acrylic elastomer which is linked to the polyester and the polyfunctional compound, particularly PMDA, which is at least partly reacted. It is even better if in the manufactured article there is a total amount of PMDA ranging from 0.05 to 5% and a free PMDA concentration which can be greater than 5 parts per million. The presence of free PMDA indicates that the amount of PMDA used during preparation of the expanded manufactured article is in excess with respect to the stoichiometric value required by the reaction of PMDA with the carboxyl groups of the polyester.

An expanded material obtained by extrusion-foaming of an aromatic polyester resin comprising the masterbatch of the present invention has an extruded density of 120-140 kg/m³, a shear elongation at break from 17 to 25% and a compression strength of 1.4-1.8 N/mm² as measured according to ISO 845, ISO 1922 and ISO 844 respectively.

The aromatic resins that can be used to prepare the expanded manufactured articles are obtained by polycondensation of dicarboxylic aromatic acids or derivatives thereof such as methyl esters with diols with 2-10 carbon atoms.

Terephthalic acid and naphthalene dicarboxylic acids are preferred acids. The preferred diols are ethylene glycol, 1,4-dibutanediol and cyclohexane dimethanol. Polyethylene terephthalate (PET) and its copolymers containing up to 20% by weight of units derived from isophthalic acid or 2,6 naphthalene dicarboxylic acid are preferred.

The intrinsic viscosity of the polyesters to which the masterbatch is added ranges generally from 0.5 to 1.0 dl/g. Recycled polyester from the post-consumer cycle can be used conveniently in the step for preparing the expanded manufactured articles.

The gases used in the expansion step are of a known type, such as carbon dioxides, nitrogen dioxides, C4-C10 hydrocarbons and fluorochlorohydrocarbons. The amount that can be used is 0.5-20% by weight.

In the masterbatch there can be additives of several kinds, such as stabilizers for polyolefins, talc, nucleating agents of the class of polytetrafluoroethylene and perfluoropolyethers, flame retardants. The amounts that can be used generally range from 0.1 to 15% by weight.

The intrinsic viscosity of the polyester resin is measured by dissolving 0.5 g of resin in 100 ml of a 60/40 mixture by weight of phenol and tetrachloroethane, working at 25°C according to ASTMD 4603-86.

The measurements of shear elongation at break are performed according to ISO 1922, the measurements of compression strength are performed according to ISO 844, the measurements of modulus shear are performed according to ISO 1922, the measurements of shear strength are performed according to ISO 1922 and the measurements of density according to ISO 845.

The following examples are provided by way of non-limiting illustration of the invention.

### EXAMPLES

### Example 1 (preparation of the masterbatch)

A co-rotating twin-screw extruder is fed, after drying at 60°C for 6 hours, with 49 kg/h of "GMA" Lotader AX8900 elastomer manufactured by Arkema, having a melt flow index (MFI) (190C/2.16 kg) of 6 g/10' measured according to the ASTM D-1238 method.

After the melting and homogenization of the material, the pyromellitic anhydride is fed on the order of 1 kg/h.

The anhydride is fed in a lateral port of the extruder in the L/D20 position. The extruded product is converted into granules.

The conditions for preparing the masterbatch are the following:
- Extruder characteristics: screw diameter, 40 mm; L/D ratio, 30
- Total hourly flow-rate: 50 kg/h
- Rotation rate of screw feeder: 220 rpm
- Extrusion temperature:

- Region 1: 40 °C
- Region 2: 80 °C
- Region 3: 80 °C
- Region 4: 95 °C
- Region 5: 100 °C
- Region 6: 95 °C
- Region 7: 95 °C
- Die: 90 °C
- Water bath temperature: 15 °C.

Granules are obtained (by head cutting or strand cutting) which are then available for use.

### EXAMPLE 2

A co-rotating twin-screw extruder is fed, after drying at 60°C for 6 hours, with 45 kg/h of "GMA" Lotader AX8900 elastomer manufactured by Arkema, having an MFI (190C/2.16 kg) of 6 g/10 min measured according to the ASTM D-1238 method.

After the melting and homogenization of the material, the pyromellitic anhydride is fed on the order of 5 kg/h.

### EXAMPLE 3

One proceeds as in Example 1, with the only difference that the elastomeric matrix is composed of 30% w/w of Lotader AX8900 (MFI 6 g/10 min) and 70% EBA Lotryl 29MA03 manufactured by Atofina. The quantity of pyromellitic anhydride and the production conditions of the masterbatch remain unchanged.

### EXAMPLE 4

One proceeds as in Example 1, with the only difference that instead of the "GMA" Lotader AX8900 elastomer, the EBA Lotryl 29MA03 by Atofina is used. The amount of pyromellitic anhydride and the production conditions of the masterbatch remain unchanged.

### EXAMPLE 5

One proceeds as in Example 1, with the only difference that instead of the "GMA" Lotader AX8900 elastomer, E-BA-GMA Elvaloy-PTW by DuPont is used. The amount of pyromellitic anhydride and the production conditions of the masterbatch remain unchanged.

### EXAMPLE 6 for comparison (production of expanded panel by using M&G expandable resin)

Using a twin-screw extruder, an expanded PET panel is produced by following the following procedure. After drying at 175 °C for 6 hours, a twin-screw extruder, designed appropriately to produce expanded materials, is fed with 140 kg/h of COBITECH-2 resin, having an IV of 1.20 dl/g, produced by M&G (Mossi & Ghisolfi). After melting, CO₂ is added to the polyester to generate foam. The process conditions in which the test is performed are the following:
- Characteristic of extruder: screw diameter, 60 mm; L/D screw ratio, 36
- Hourly polymer flow-rate: 140 kg/h
- Expanding agent used: CO₂
- Hourly gas flow-rate: 1.5 kg/h
- Extrusion conditions:

- Region 1: 295 °C
- Region 2: 295 °C
- Region 3: 280 °C
- Region 4: 280 °C
- Region 5: 275 °C
- Exchanger: 260 °C
- Mixer: 236 °C
- Die: 280 °C
- Pressure in die: 69 bars

The data related to foam quality are given in Table 1.

### EXAMPLE 7 for comparison (production of expanded panel by using WELLMAN expandable resin)

Using a twin-screw extruder, an expanded PET panel is manufactured by following the following procedure. After drying at 175 °C for 6 hours, a twin-screw extruder designed appropriately to produce expanded materials is fed with 140 kg/h of PERMACLEAR expandable resin with an IV of 1.22 dl/g produced by WELLMAN. After melting, the polyester receives the addition of CO₂ to produce foam. The working conditions in which the test is performed are the following:
- Characteristic of extruder: screw diameter, 60 mm; L/D screw ratio, 3 6
- Hourly polymer flow-rate: 140 kg/h
- Expanding agent used: CO₂
- Hourly gas flow-rate: 1.5 kg/h
- Extrusion conditions:

- Region 1: 295 °C
- Region 2: 295 °C
- Region 3: 280 °C
- Region 4: 280 °C
- Region 5: 275 °C
- Exchanger: 260 °C
- Mixer: 236 °C
- Die: 280 °C
- Pressure in die: 69 bars

The data related to foam quality are given in Table 1.

### EXAMPLE 8 for comparison (production of expanded panel by using impact modifiers)

Using a twin-screw extruder, an expanded PET panel is produced by following the following procedure. After drying at 175 °C for 6 h, a twin-screw extruder designed appropriately for producing expanded materials is fed with 140 kg/h of COBITECH-2 resin. 5 kg/h of "GMA" Lotader AX8900 elastomer manufactured by Arkema are added to the standard resin. PMDA is not added. After the melting of the two polymers, the mixture receives the addition of CO₂ to produce foam. The process conditions in which the test is performed are the following:
- Characteristic of extruder: screw diameter, 60 mm; L/D screw ratio, 3 6
- Hourly polymer flow-rate: 140 kg/h
- Hourly elastomer flow-rate: 5 kg/h
- Expanding agent used: CO₂
- Hourly gas flow-rate: 1.5 kg/h
- Extrusion conditions:

- Region 1: 295 °C
- Region 2: 295 °C
- Region 3: 280 °C
- Region 4: 282 °C
- Region 5: 277 °C
- Exchanger: 260 °C
- Mixer: 236 °C
- Die: 280 °C
- Pressure in die: 73 bars

The data related to foam quality are given in Table 1.

### EXAMPLE 9 for comparison (production of expanded panel containing impact modifiers)

Using a twin-screw extruder, an expanded PET panel is produced by following the following procedure. After drying at 175 °C for 6 h, a twin-screw extruder designed appropriately for producing expanded materials is fed with 140 kg/h of PERMACLEAR expandable resin. 5 kg/h of "GMA" Lotader AX8900 elastomer manufactured by Arkema are added to the standard resin. PMDA is not added. After the melting of the polymeric materials, the mixture receives the addition of CO₂ to produce foam. The process conditions in which the test is performed are the following:
- Characteristic of extruder: screw diameter, 60 mm; L/D screw ratio, 36
- Hourly polymer flow-rate: 140 kg/h
- Hourly elastomer flow-rate: 5 kg/h
- Expanding agent used: CO₂
- Hourly gas flow-rate: 1.5 kg/h
- Extrusion conditions:

- Region 1: 295 °C
- Region 2: 295 °C
- Region 3: 280 °C
- Region 4: 282 °C
- Region 5: 277 °C
- Exchanger: 260 °C
- Mixer: 236 °C
- Die: 280 °C
- Pressure in die: 73 bars

The data related to foam quality are given in Table 1.

### EXAMPLE 10 (production of expanded panel according to the present invention)

Using a twin-screw extruder, an expanded PET panel is produced by following the following procedure. After drying at 175 °C for 6 h, a twin-screw extruder designed appropriately for producing expanded materials is fed with 140 kg/h of COBITECH-2 resin. 5.5 kg/h of masterbatch produced as described in Example 1 are added to the resin. After melting the polymeric materials, the mixture receives the addition of CO₂ to produce foam. The process conditions in which the test is performed are the following:
- Characteristic of extruder: screw diameter, 60 mm; L/D screw ratio, 36
- Hourly polymer flow-rate: 140 kg/h
- Hourly elastomer flow-rate: 5 kg/h
- Expanding agent used: CO₂
- Hourly gas flow-rate: 1.5 kg/h
- Extrusion conditions:
- Region 1: 295 °C
- Region 2: 295 °C
- Region 3: 280 °C
- Region 4: 282 °C
- Region 5: 277 °C
- Exchanger: 260 °C
- Mixer: 236 °C
- Die: 280 °C
- Pressure in die: 73 bars

The data related to foam quality are given in Table 1.

### EXAMPLE 11 (production of expanded panel according to the present invention)

Using a twin-screw extruder, an expanded PET panel is produced by following the following procedure. After drying at 175 °C for 6 h, a twin-screw extruder designed appropriately for producing expanded materials is fed with 140 kg/h of COBITECH-2 resin. 5.5 kg/h of masterbatch produced as described in Example 2 are added to the standard resin. After the melting of the polymeric materials, the mixture receives the addition of CO₂ to produce foam. The process conditions in which the test is performed are the following:

Characteristic of extruder: screw diameter, 60 mm; L/D screw ratio, 36
- Hourly polymer flow-rate: 140 kg/h
- Hourly elastomer flow-rate: 5 kg/h
- Expanding agent used: CO₂
- Hourly gas flow-rate: 1.5 kg/h
- Extrusion conditions:

- Region 1: 295 °C
- Region 2: 295 °C
- Region 3: 280 °C
- Region 4: 282 °C
- Region 5: 277 °C
- Exchanger: 260 °C
- Mixer: 236 °C
- Die: 280 °C
- Pressure in die: 75 bars

The data related to foam quality are given in Table 1.

### EXAMPLE 12 (production of expanded panel according to the present invention)

Using a twin-screw extruder, an expanded PET panel is produced by following the following procedure. After drying at 175 °C for 6 h, a twin-screw extruder designed appropriately for producing expanded materials is fed with 140 kg/h of COBITECH-2 resin. 5.5 kg/h of masterbatch produced as described in Example 3 are added to the standard resin. After the melting of the polymeric materials, the mixture receives the addition of CO₂ to produce foam. The process conditions in which the test is performed are the following:
- Characteristic of extruder: screw diameter, 60 mm; L/D screw ratio, 36
- Hourly polymer flow-rate: 140 kg/h
- Hourly elastomer flow-rate: 5 kg/h
- Expanding agent used: CO₂
- Hourly gas flow-rate: 1.5 kg/h
- Extrusion conditions:

- Region 1: 295 °C
- Region 2: 295 °C
- Region 3: 280 °C
- Region 4: 282 °C
- Region 5: 277 °C
- Exchanger: 260 °C
- Mixer: 236 °C
- Die: 280 °C
- Pressure in die: 79 bars

The data related to foam quality are given in Table 1.

### EXAMPLE 13 (production of expanded panel according to the present invention)

Using a twin-screw extruder, an expanded PET panel is produced by following the following procedure. After drying at 175 °C for 6 h, a twin-screw extruder designed appropriately for producing expanded materials is fed with 140 kg/h of COBITECH-2 resin. 5.5 kg/h of masterbatch produced as described in Example 4 are added to the standard resin. After the melting of the polymeric materials, the mixture receives the addition of CO₂ to produce foam. The process conditions in which the test is performed are the following:
- Characteristic of extruder: screw diameter, 60 mm; L/D screw ratio, 36
- Hourly polymer flow-rate: 140 kg/h
- Hourly elastomer flow-rate: 5 kg/h
- Expanding agent used: CO₂
- Hourly gas flow-rate: 1.5 kg/h
- Extrusion conditions:

- Screw rotation rate: 15 rpm
- Region 1: 295 °C
- Region 2: 295 °C
- Region 3: 280 °C
- Region 4: 282 °C
- Region 5: 277 °C
- Exchanger: 260 °C
- Mixer: 236 °C
- Die: 280 °C
- Pressure in die: 79 bars

The data related to foam quality are given in Table 1.

### EXAMPLE 14 (production of expanded panel according to the present invention)

Using a twin-screw extruder, an expanded PET panel is produced by following the following procedure. After drying at 175 °C for 6 h, a twin-screw extruder designed appropriately for producing expanded materials is fed with 140 kg/h of POLYCLEAR INVISTA 1101 resin having an intrinsic viscosity IV of 0.8 dl/g. 5.5 kg/h of masterbatch produced as described in Example 4 are added to the standard resin. After the melting of the polymeric materials, the mixture receives the addition of CO₂ to produce foam. The process conditions in which the test is performed are the following:
- Characteristic of extruder: screw diameter, 60 mm; L/D screw ratio, 36
- Hourly polymer flow-rate: 140 kg/h
- Hourly elastomer flow-rate: 7 kg/h
- Expanding agent used: CO₂
- Hourly gas flow-rate: 1.5 kg/h
- Extrusion conditions:

- Screw rotation rate: 15 rpm
- Region 1: 295 °C
- Region 2: 295 °C
- Region 3: 280 °C
- Region 4: 282 °C
- Region 5: 277 °C
- Exchanger: 261 °C
- Mixer: 238 °C
- Die: 280 °C
- Pressure in die: 76 bars

The data related to foam quality are given in Table 1.

**TABLE 1**

| | Density (kg/m³) | Compressive strength N/mm² | Shear modulus N/mm2 | Shear strength N/mm² | Shear elongation at break (%) |
|---|---|---|---|---|---|
| Comparison example 6 | 130 | 1.44 | 20 | 0.7 | 2.5 |
| Comparison example 7 | 132 | 1.46 | 19 | 0.8 | 2.6 |
| Comparison example 8 | 134 | 1.35 | 18 | 0.82 | 5.8 |
| Comparison example 9 | 129 | 1.41 | 18 | 0.88 | 5.9 |
| Example 10 | 131 | 1.44 | 19 | 0.95 | 19 |
| Example 11 | 132 | 1.4 | 19 | 0.93 | 17 |
| Example 12 | 135 | 1.52 | 18 | 0.96 | 20 |
| Example 13 | 128 | 1.55 | 20 | 0.91 | 19 |
| Example 14 | 126 | 1.78 | 21 | 0.98 | 25 |

The disclosures in Italian Patent Application No. MI2007A001958 from which this application claims priority are incorporated herein by reference.

## Claims

1. Masterbatch usable for producing manufactured articles made of expanded aromatic polyester resin, comprising an elastomeric material that is an ethylene/acrylic ester/third monomer terpolymer, where the acrylic ester radical is an alkyl or isoalkyl containing 1 to 6 carbon atoms, while the third monomer is maleic anhydride or glycidyl methacrylate or mixtures thereof, wherein the content of maleic anhydride and/or methacrylate is 2 to 20% by weight, the content of acrylic ester is 10-40% by weight, the remaining being ethylene, wherein a polyfunctional compound is dispersed in the elastomeric material and is selected among dianhydrides of tetracarboxylic aromatic or aliphatic acids.

2. The masterbatch according to claim 1, wherein the alkyl radical of the acrylic ester is selected among methyl, ethyl and butyl.

3. The masterbatch according to claim 1, wherein the terpolymer is replaced in an amount from 2 to 95% by weight by an elastomeric ethylene-methylacrylate, ethylene-ethylacrylate and/or ethylene-butylacrylate copolymer.

4. The masterbatch according to each one of claims 1 to 3, wherein the polyfunctional compound is used in a quantity from 0.05 to 25% by weight.

5. The masterbatch according to each one of claims 1-4, wherein the polyfunctional compound is pyromellitic anhydride.

6. An expanded material obtained by extrusion-foaming of an aromatic polyester resin comprising the masterbatch of claim 1, said material having an extruded density of 120-140 kg/m³, a shear elongation at break from 17 to 25% and a compression strength of 1.4-.1.8 N/mm² as measured according to ISO 845, ISO 1922 and ISO 844 respectively.

7. A material made of expanded aromatic polyester resin in which an elastomeric material of claims 1-3 is dispersed in the form of domains having an average size of less than 50 µm.

8. The material according to claim 7, wherein the domains of the elastomeric material have an average size of less than 10 µm.

9. The material according to each one of claims 7 to 8, wherein there is a quantity of total pyromellitic anhydride ranging from 0.05 to 5% by weight and a quantity of free PMDA in concentrations higher than 5 ppm.

10. Use of a masterbatch according to each one of claims 1 to 5 or of the components thereof as indicated in said claims in the production of expanded polyester resin manufactured articles.

## Patentansprüche

1. Masterbatch, der zur Produktion von Erzeugnissen verwendet werden kann, die aus geschäumtem aromatischem Polyesterharz hergestellt sind, umfassend ein Elastomermaterial, das ein Ethylen/Acrylester/drittes Monomer-Terpolymer ist, worin das Acrylester-Radikal ein Alkyl oder Isoalkyl ist, das 1 bis 6 Kohlenstoffatome enthält, während das dritte Monomer Maleinsäureanhydrid oder Glycidylmethacrylat oder Mischungen davon ist, worin der Gehalt an Maleinsäureanhydrid und/oder Glycidylmethacrylat 2 bis 20 Gewichtsprozent beträgt, der Gehalt an Acrylester 10 bis 40 Gewichtsprozent beträgt, wobei der Rest Ethylen ist, worin eine mehrfunktionelle Verbindung im Elastomermaterial dispergiert ist und aus Dianhydriden von aromatischen oder aliphatischen Tetracarbonsäuren ausgewählt ist.

2. Der Masterbatch gemäß Anspruch 1, worin das Alkylradikal des Acrylesters aus Methyl, Ethyl und Butyl ausgewählt ist.

3. Der Masterbatch gemäß Anspruch 1, worin das Terpolymer in einer Menge von 2 bis 95 Gewichtsprozent durch ein elastomeres Ethylen-Methylacrylat-, Ethylen-Ethylacrylat- und/oder Ethylen-Butylacrylat-Copolymer ersetzt wird.

4. Der Masterbatch gemäß jedem der Ansprüche 1 bis 3, worin die mehrfunktionelle Verbindung in einer Menge von 0,05 bis 25 Gewichtsprozent verwendet wird.

5. Der Masterbatch gemäß jedem der Ansprüche 1-4, worin die mehrfunktionelle Verbindung Pyromellitsäureanhydrid ist.

6. Ein geschäumtes Material, das durch Extrusionsschäumen eines aromatischen Polyesterharzes gewonnen wird, das den Masterbatch gemäß Anspruch 1 umfasst, wobei das Material eine extrudierte Dichte von 120-140 kg/m³, eine Scherdehnung von 17 bis 25% und eine Kompressionsfestigkeit von 1,4-1,8 N/mm², gemessen nach ISO 845, ISO 1922 beziehungsweise ISO 844, hat.

7. Ein Material, hergestellt aus geschäumtem aromatischem Polyesterharz, worin ein Elastomermaterial gemäß Anspruch 1-3 in Form von Domänen mit einer Durchschnittsgröße von weniger als 50µm dispergiert ist.

8. Das Material gemäß Anspruch 7, worin die Domänen des Elastomermaterials eine Durchschnittsgröße von weniger als 10 µm haben.

9. Das Material gemäß jedem der Ansprüche 7 bis 8, worin eine Gesamtmenge an Pyromellitsäureanhydrid in einem Bereich von 0,05 bis 5 Gewichtsprozent liegt und eine Menge an freiem PMDA in Konzentrationen von mehr als 5 ppm vorhanden ist.

10. Verwendung eines Masterbatchs gemäß jedem der Ansprüche 1 bis 5 oder der Komponenten davon wie in den Ansprüchen angegeben in der Produktion von Erzeugnissen aus geschäumtem Polyesterharz.

## Revendications

1. Mélange maître utilisable pour produire des articles manufacturés faits en résine de polyester aromatique expansée, comprenant un matériau élastomère qui est un terpolymère d'éthylène/ester acrylate/troisième monomère, où le radical ester acrylate est un alkyle ou isoalkyle contenant 1 à 6 atomes de carbone, tandis que le troisième monomère est l'anhydride maléique ou le méthacrylate de glycidyle ou leurs mélanges, dans lequel la teneur en anhydride maléique et/ou méthacrylate de glycidyle est de 2 à 20 % en poids, la teneur en ester acrylate est de 10 à 40 % en poids, le reste étant de l'éthylène, et dans lequel un composé polyfonctionnel est dispersé dans le matériau élastomère et est choisi parmi les dianhydrides d'acides tétracarboxyliques aromatiques ou aliphatiques.

2. Mélange maître selon la revendication 1, dans lequel le radical alkyle de l'ester acrylate est choisi parmi méthyle, éthyle et butyle.

3. Mélange maître selon la revendication 1, dans lequel le terpolymère est remplacé en une quantité de 2 à 95 % en poids par un copolymère élastomère d'éthylène/ acrylate de méthyle, d'éthylène/acrylate d'éthyle et/ou d'éthylène/acrylate de butyle.

4. Mélange maître selon chacune des revendications 1 à 3, dans lequel le composé polyfonctionnel est utilisé en une quantité de 0,05 à 25 % en poids.

5. Mélange maître selon chacune des revendications 1 à 4, dans lequel le composé polyfonctionnel est l'anhydride pyromellitique.

6. Matériau expansé obtenu par moussage par extrusion d'une résine de polyester aromatique comprenant le mélange maître de la revendication 1, ledit matériau ayant une masse volumique à l'état extrudé de 120 à 140 kg/m³, un allongement en cisaillement à la rupture de 17 à 25 % et une résistance à la compression de 1,4 à 1,8 N/mm², tels que mesurés conformément aux normes ISO 845, ISO 1922 et ISO 844 respectivement.

7. Matériau fait de résine de polyester aromatique expansée, dans lequel un matériau élastomère des revendications 1 à 3 est dispersé sous la forme de domaines ayant une taille moyenne inférieure à 50 µm.

8. Matériau selon la revendication 7, dans lequel les domaines du matériau élastomère ont une taille moyenne inférieure à 10 µm.

9. Matériau selon chacune des revendications 7 et 8, dans lequel la quantité totale d'anhydride pyromellitique est située dans la plage allant de 0,05 à 5 % en poids et la quantité de PMDA libre correspond à une concentration supérieure à 5 ppm.

10. Utilisation d'un mélange maître selon chacune des revendications 1 à 5 ou de composants de celui-ci comme indiqué dans lesdites revendications, dans la production d'articles manufacturés en résine de polyester expansée.
